# EUROPEAN PATENT APPLICATION

(11) **EP 1 067 808 A1**
(43) Date of publication of application: **10.01.2001**
(21) Application number: 00305544.9
(22) Date of filing: 30.06.2000
(51) Int. Cl.: H04Q 7/22

(54) **System and method for service provision through a cellular telephone connection**

(30) Priority: 09.07.1999 US 320295
(71) Applicant: Brain Storm Technologies Ltd., Tel Aviv 52521 (IL)
(72) Inventor: Zimmerman, Israel, Ashdod 77710 (IL)
(74) Representative: Freed, Arthur Woolf

(57) **Abstract**

A method and a system for providing information and/or a direct service to the user of a cellular telephone, according to the location of the user. The location of the user is determined according to the location of the cellular telephone. The information and/or service can then be targeted to the user according to the location of the user. Examples of suitable informational services include, but are not limited to, providing the name and address of a particular provider of goods or services in the defined geographical area; providing an address in response to a request which included a particular name, similar to the mechanism for automatically providing telephone numbers upon request to directory assistance; providing information on public transportation services available to transport the user, such as information on bus lines and times of departure; and providing directions or traveling guidance, optionally including a report on traffic conditions where appropriate, for a user traveling on foot or by motorized vehicle to a particular destination, such that a user who was lost in an unfamiliar area could request assistance to reach that destination for example. An example of a direct service includes, but is not limited to, sending a taxicab to the location of a requesting user. Optionally and preferably, these services, are provided automatically, such that the user can request the service by calling to a particular telephone number with the cellular telephone.

## Description

### FIELD AND BACKGROUND OF THE INVENTION

The present invention relates to a system and method for providing services through a cellular telephone, and in particular, for providing such services according to the location of the cellular telephone.

Cellular telephones are becoming increasingly popular for portable telephone use, particularly for users who are interested in rapid, mobile communication. Such cellular telephones are highly portable and are therefore particularly suitable for users who are traveling, even within a city. For example, a user who is interested in finding a particular company can simply call that company while traveling and instantly receive directions and guidance. However, currently such assistance requires communication with a human being at the other end of the connection, such that a cellular telephone user can only receive assistance by placing a telephone call to such an individual.

A more useful solution would provide automatic assistance, such that the user could call a predetermined telephone number with the cellular phone, and could then receive assistance without the intervention of another human being. Furthermore, such a solution would enable the assistance to be targeted according to the geographical location of the user. For example, if a user is traveling through a particular part of a large city and wishes to determine the location of a provider of a particular good or service, receiving the name and address of a provider which is located outside of the metropolitan area of that city would not be helpful. The assistance should therefore be targeted geographically, according to the location of the cellular phone (and hence presumably of the user), in order to provide information and/or services which are most useful to the cellular phone user. Unfortunately, such a solution is not currently available.

There is thus a need for, and it would be useful to have, a system and a method for providing targeted assistance to the user of a cellular phone according to the location of that cellular phone, such that information and/or a service is provided which is related to the current location of the user.

### BRIEF DESCRIPTION OF THE DRAWINGS

The foregoing and other objects, aspects and advantages will be better understood from the following detailed description of a preferred embodiment of the invention with reference to the drawings, wherein:
FIG. 1 is a schematic block diagram of an exemplary overall system according to the present invention;
FIG. 2 is a flowchart of a first exemplary method for providing a service to the user of the cellular telephone according to the present invention; and
FIG. 3 is a flowchart of a second exemplary method for providing information to the user of the cellular telephone according to the present invention.

### SUMMARY OF THE INVENTION

The present invention is of a method and a system for providing targeted services and/or information to a user of a cellular telephone according to the location of the cellular telephone, and hence, the location of the user. The term "targeted" means that the services and/or information are provided after correlating the location of the user with a map of such services, in which the "map" could simply be a database of location information. Thus, the user could preferably automatically receive a service which would be adjusted according to the location of the user, thereby increasing both the usefulness of the information and the efficiency of providing such a targeted service.

According to the present invention, there is provided a system for providing a service to a user of a cellular telephone according to a location of the cellular telephone, the system comprising: (a) a locator for determining the location of the cellular telephone; (b) a map database for providing information about a location of a plurality of service providers related to the service; and (c) a position correlator for selecting one of the plurality of service providers according to the location of the cellular telephone, and for providing the service to the user according to the selected service provider.

According to another embodiment of the present invention, there is provided a method for providing a service to a user according to a location of a cellular telephone of the user, the method comprising the steps of: (a) placing a telephone call by the user through the cellular telephone to request the service; (b) determining the location of the cellular telephone of the user; (c) selecting a service provider for providing the service according to a location of the service provider and a location of the cellular telephone of the user; and (d) notifying the user of the location of the service provider through the cellular telephone of the user.

According to yet another embodiment of the present invention, there is provided a method for providing a reminder to a user to perform at least one action related to a fixed location according to a location of a cellular telephone of the user, the method comprising the steps of: (a) determining the location of the cellular telephone of the user; (b) comparing the location of the cellular telephone of the user to the fixed location; and (c) if the location of the cellular telephone of the user is within a predetermined distance of the fixed location, communicating with the user through the cellular telephone to perform the at least one action associated with the fixed location.

Hereinafter, the term "network" refers to a connection between any two electronic devices which permits the transmission of data.

Hereinafter, the term "cellular telephone" refers to any type of electronic device which permits voice communication through a wireless channel, for example through transmission of radio waves, for connection to the PSTN (public switched telephone network) system.

Hereinafter, the term "computer" includes, but is not limited to, personal computers (PC) having an operating system such as DOS, Windows™, OS/2™ or Linux; Macintosh™ computers; computers having JAVA™-OS as the operating system; and graphical workstations such as the computers of Sun Microsystems™ and Silicon Graphics™, and other computers having some version of the UNIX operating system such as AIX™ or SOLARIS™ of Sun Microsystems™; or any other known and available operating system. Hereinafter, the term "Windows™" includes but is not limited to Windows95™, Windows 3.x™ in which "x" is an integer such as "1", Windows NT™, Windows98™, Windows CE™ and any upgraded versions of these operating systems by Microsoft Inc. (USA).

The method of the present invention could be described as a series of steps performed by a data processor, and as such could optionally be implemented as software, hardware or firmware, or a combination thereof. For the present invention, a software application could be written in substantially any suitable programming language, which could easily be selected by one of ordinary skill in the art. The programming language chosen should be compatible with the computer hardware and operating system according to which the software application is executed. Examples of suitable programming languages include, but are not limited to, C, C++ and Java.

### DETAILED DESCRIPTION OF THE INVENTION

The present invention is of a method and a system for providing information and/or a direct service to the user of a cellular telephone, according to the location of the user. The location of the user is determined according to the location of the cellular telephone. The information and/or service can then be targeted to the user according to the location of the user. Examples of suitable informational services include, but are not limited to, providing the name and address of a particular provider of goods or services in the defined geographical area; providing an address in response to a request which included a particular name, similar to the mechanism for automatically providing telephone numbers upon request to directory assistance; providing information on public transportation services available to transport the user, such as information on bus lines and times of departure; and providing directions or traveling guidance, optionally including a report on traffic conditions where appropriate, for a user traveling on foot or by motorized vehicle to a particular destination, such that a user who was lost in an unfamiliar area could request assistance to reach that destination for example. An example of a direct service includes, but is not limited to, sending a taxicab to the location of a requesting user. Optionally and preferably, these services are provided automatically, such that the user can request the service by calling to a particular telephone number with the cellular telephone.

The principles and operation of a system and a method according to the present invention may be better understood with reference to the drawings and the accompanying description, it being understood that these drawings are given for illustrative purposes only and are not meant to be limiting.

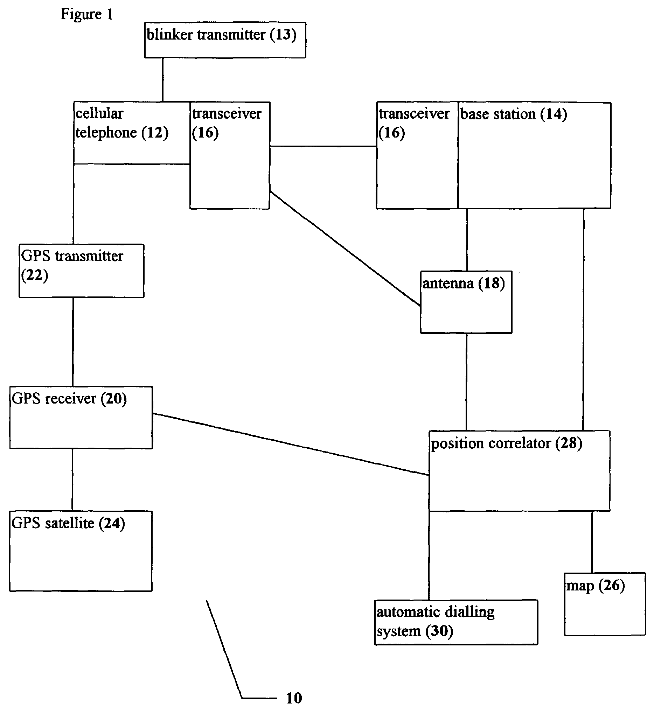

Referring now to the drawings, Figure 1 is a schematic block diagram of an overall system according to the present invention. It should be noted that these blocks are intended as functional entities only, such that the functional relationships between the entities are shown, rather than any physical connections and/or physical relationships.

A system **10** features a cellular telephone **12**, which is in communication with a base station **14**. Cellular telephone **12** and base station **14** each feature a transceiver **16**, for transmitting and receiving the waves of the designated frequency, such as radiowaves. In addition, cellular telephone **12** is in communication with an antenna **18** for also receiving the radiowaves. Therefore, cellular telephone **12** sends at least two signals: at least one signal to base station **14**, and at least another signal to antenna **18**.

Currently a number of different methods are available for determining the geographical location of cellular telephone **12**. For example, the position of cellular telephone **12** could be determined by triangulating between signals sent from cellular telephone **12** to antenna **18**, and signals sent from cellular telephone **12** to base station **14**, such that the triangulation would be performed by a triangulator (not shown). Of course many such methods are known in the art and could easily be selected by one of ordinary skill in the art.

In addition, optionally and preferably system **10** features a plurality of GPS (global positioning system) receivers **20** distributed through the wireless network for the cellular phones. Under this preferred embodiment, cellular telephone **12** would also include a GPS transmitter **22**. The GPS technology is well known in the art. Briefly, each GPS receiver **20** is in communication with a plurality of GPS satellites **24**. When GPS transmitter **22** transmits to GPS receiver **20**, the signal is passed to at least one GPS satellite **24**, which then returns the necessary information for precisely determining the location of cellular telephone **12**. Such a system for incorporating GPS technology into wireless telephones has been recently disclosed by Lucent Technologies Ltd.

According to a preferred embodiment of the present invention, the location of cellular telephone **12** is determined according to the location of the cell of the cellular network which is currently in communication with cellular telephone **12**. Although the degree of precision for determining the location of cellular telephone **12** is lower in this embodiment, it is preferred because of the ease and simplicity of implementation. Typically, a cell in a cellular network covers about half of a mile in a populated area, and about two to three miles in a less populated area. The cellular telephone network provider can easily determine the cell from which cellular telephone **12** is transmitting, and the degree of precision is sufficient for many of the services described herein.

As another example, a blinker transmitter **13** for cellular telephone **12** could be preferably and optionally added and/or adapted to repeatedly transmit a signal to base station **14** for determining the location of cellular telephone **12**, even without the ability to transmit voice data for example, or alternatively in addition to such an ability. If cellular telephone **12** is implemented without the ability to transmit voice data, preferably cellular telephone **12** is provided with an optional keypad (not shown) for entering information to a service provider, such as a request for a particular service, for example.

In any case, the components which are used to determine the location of cellular telephone **12** can be termed a "locator" (not shown). Thus, the location of the user is also presumably determined from the location of cellular telephone **12**.

Regardless of the mechanism used to determine the geographical location of the user, once the location of cellular telephone **12** has been determined, this information can be used to provide targeted services to the user. These services are targeted in the sense that they provide information which enables the user to find a particular provider of goods or services in a defined geographical area, or alternatively that the service is provided directly to the user according to the defined geographical area.

Examples of suitable informational services for providing to the user include, but are not limited to, providing the name and address of a particular provider of goods or services in the defined geographical area; providing an address in response to a request which included a particular name, similar to the mechanism for automatically providing telephone numbers upon request to directory assistance; providing information on public transportation services available to transport the user, such as information on bus lines and times of departure; reminding the user to perform at least one action associated with a fixed location when the cellular telephone of the user is within a predetermined distance of the fixed location, such as retrieving a package for example; and providing directions or traveling guidance, optionally including a report on traffic conditions where appropriate, for a user traveling on foot or by motorized vehicle to a particular destination, such that a user who was lost in an unfamiliar area could request assistance to reach that destination for example.

An example of a direct service includes, but is not limited to, sending a taxicab to the location of a requesting user.

In order to provide these services to the user, system **10** also features a map database **26** and a position correlator **28**. Map database **26** is preferably a collection of electronically stored and accessible information related to the location of various providers of goods and services, the location of various streets and highways in the geographical area, information about the providers of goods and services themselves, such as hours of business and type of stock and/or services which are provided, and any other information required for providing targeted services to the user. Position correlator **28** determines the type of service which is being requested from cellular telephone **12**, as well as the geographical location of cellular telephone **12**, and correlates this information to provide the service to the user. Position correlator **28** is typically implemented as a software module being operated by a computer, which would also access map database **26** stored on some type of non-volatile storage medium for example.

For example, if the user wanted to receive a taxicab, as described in greater detail below, the user could optionally place a telephone call to a predetermined number through cellular telephone **12**. Position correlator **28** would interpret this telephone call to the specific telephone number as a request for a taxicab. Position correlator **28** would then access map database **26** in order to locate a taxicab service company. Position correlator **28** could then optionally connect cellular telephone **12** of the user directly to the taxicab service company, such that the user would request the taxicab from a human operator. Alternatively, position correlator **28** would automatically request the taxicab from the taxicab service company. In either case, position correlator **28** would preferably pass the location of cellular telephone **12** of the user to the taxicab service company, in order to enable the dispatcher for that company to send a taxicab to the correct location.

Alternatively and preferably, each taxicab driver for the company would also be provided with a cellular telephone **12**, the location of which would be updated regularly by a central unit (not shown). Position correlator **28** would then compare the current location of the user with the current location of each taxicab driver according to map database **26**. Once a taxicab driver is found who is sufficiently close to meet the criteria of position correlator **28**, an automatic dialing system **30** which is associated with position correlator **28** could then contact that taxicab driver through cellular telephone **12** of the driver, to indicate that a customer needed a taxicab. These criteria could be set such that the driver would need to be located within one kilometer from the customer, for example, or any other suitable distance. Alternatively and more preferably, a plurality of taxicab drivers are contacted by automatic dialing system **30**, such that only a taxicab driver who is available would respond and could then travel to the customer. Thus, system **10** of the present invention could render dispatchers for taxicab companies unnecessary, or at the very least reduce the required number of such dispatchers.

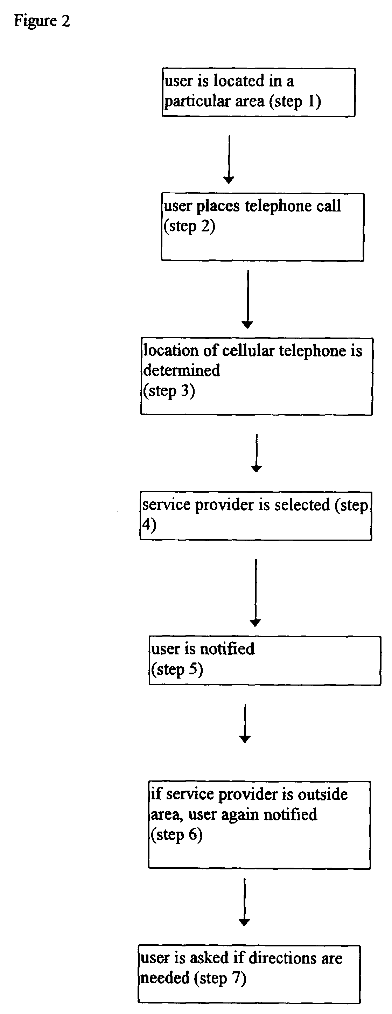

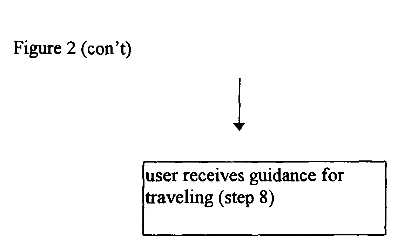

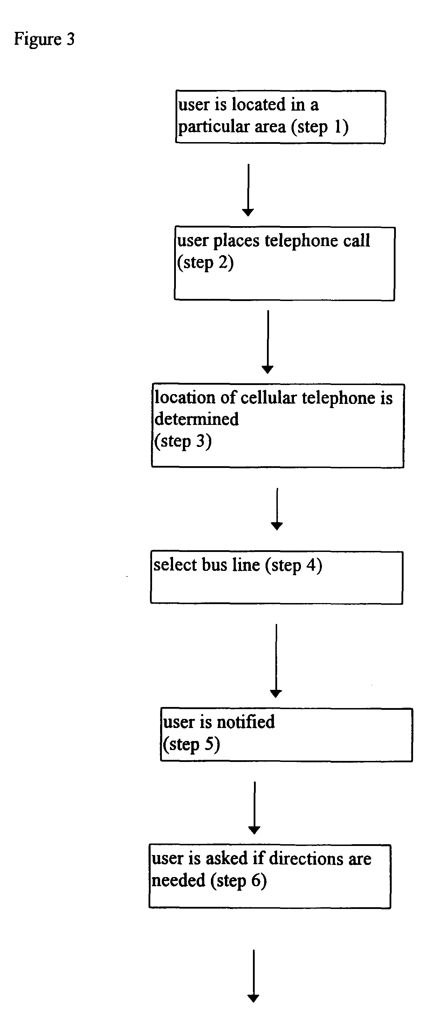

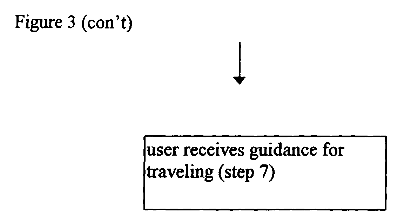

Additional examples for providing targeted services are described below. Each of the following examples for providing targeted services is explained with regard to an illustrative method flowchart in Figures 2 and 3 below. It should be understood that these are examples only and are not intended to be limiting in any way.

Figure 2 shows a flowchart of an exemplary method for enabling the user of a cellular telephone to determine the location of a provider of goods or services, such as a florist for example, which is located at a fixed location. Although the particular example is drawn to a florist, it should be understood that this is for the purposes of discussion only and is not meant to be limiting in any way, as the method would also optionally be operative with a request for the location of any type of business or institution.

In step 1, the user is located in a particular area. Typically, the area would be defined as a city block for a city. In a rural or less densely populated area, however, this particular area would preferably be increased, possibly on the order of a square kilometer, for example.

In step 2, the user requests the location of the nearest florist through the cellular phone, for example by placing a telephone call to a predetermined telephone number. In step 3, the location of the cellular telephone of the user is determined. In step 4, a florist is located from the map according to the location of the cellular phone of the user. Preferably, the florist is located according to such criteria as distance from the user, such that more preferably the closest florist is selected, hours of business, or availability of particular goods, for example. In step 5, the user is notified of the location of the florist, for example by an automatic voice messaging system through the cellular phone.

Preferably, the nearest florist is within the same predefined geographical area as the user. Optionally, if such a florist is not available within the defined area, preferably the user is notified that the located florist may be outside of the immediate location of the user in step 6.

In step 7, the user is optionally asked if directions or traveling guidance for traveling to the location of the florist is desired. If the answer is affirmative, then in step 8, the user receives such traveling guidance through the cellular telephone, for example in the form of a synthesized voice message. Preferably, steps 7 and 8 are repeated at least once before the user reaches the florist.

Of course, this method could be altered to provide a form of "directory assistance" to help the user locate the address of a particular company or individual. For example, the user could request directions or traveling guidance to a particular company. The name of the company would be used to locate the company on the map, and the location of the company would be compared to the location of the user. The method would then proceed substantially as previously described.

For either of these embodiments of the method of Figure 2, optionally and preferably, the directions and/or guidance would include a report on traffic conditions where appropriate. Alternatively and preferably, the user of the cellular phone could specifically request a report on traffic conditions in the immediate geographical area, for example. Again, the location of the cellular phone would be determined in order to automatically provide the relevant information through the cellular phone, for example through an automated voice messaging system.

Figure 3 is a flowchart of an illustrative method for providing information on public transportation services available to transport the user, such as information on bus lines and times of departure. Although the example given is related to buses, it should be understood that this is for the purposes of discussion only and is not meant to be limiting, as the method would also be operative for providing information related to the schedule of other types of public transportation as well.

In step 1, the user is located in a particular area. Typically, the area would be defined as a city block for a city. In a rural or less densely populated area, however, this particular area would preferably be increased, possibly on the order of a square kilometer, for example.

In step 2, the user submits a request for bus schedule information, for example by placing a telephone call to a predetermined telephone number. Preferably, the user could then select either a destination or a particular bus line, for example by speaking the name of the destination and/or the bus line into an automated retrieval system. Alternatively, the name of the destination and/or the bus line could be selected by pressing one or more buttons on the cellular phone itself. In step 3, the location of the cellular telephone of the user is determined. In step 4, if the user has requested a particular destination, at least one bus line is selected according to the location of the cellular phone of the user.

Preferably, the nearest bus line is within the same predefined geographical area as the user. Alternatively, a plurality of different buses may be suggested in order for the user to reach the desired destination. For example, two different buses might be required for the user to travel from the current location to the desired destination, which would be determined from the map and the current location of the cellular telephone. In step 5, the user is notified of the location of the bus line and of the schedule for departure times for the bus line, for example by an automatic voice messaging system through the cellular phone.

In step 6, the user is optionally asked if directions or traveling guidance for traveling to the location of the nearest stop for the bus is desired. If the answer is affirmative, then in step 7, the user receives such traveling guidance through the cellular telephone, for example in the form of a synthesized voice message.

Other preferred embodiments of the services provided according to the present invention include a reminder service, which would remind the user to perform one or more actions when traveling through or near a particular geographical area, through the cellular telephone. For example, the user might be reminded to stop at a particular location in order to retrieve a package when traveling near that location.

In addition, preferably the cellular telephone could be used by a parent to determine the physical location of a minor child, such that the parent could become aware of the location of the child whenever the child carries the cellular telephone.

According to yet another preferred embodiment of the present invention, a physical map could be provided to the user with at least one special number marked on this map. If the user had a question about the area shown at or near the marked number, the user could optionally and preferably place a telephone call to the number shown on the map, and could then receive information about that area of the map.

According to still another preferred embodiment of the present invention, statistics can be gathered by observing the locations of the cellular telephones of a plurality of users, for example in order to sample the behavior of a population. Such statistics could be used to predict future traffic patterns, for example.

These examples of different types of information and services are intended only for the purpose of illustration and are not meant to be limiting in any way, since many other embodiments are included within the scope of the present invention. These other embodiments could easily be selected by one of ordinary skill in the art.

It will be appreciated that the above descriptions are intended only to serve as examples, and that many other embodiments are possible within the spirit and the scope of the present invention.

## Claims

1. A system for providing a service to a user of a cellular telephone according to a location of the cellular telephone, the system comprising:
(a) a locator for determining the location of the cellular telephone;
(b) a map database for providing information about a location of a plurality of service providers related to the service; and
(c) a position correlator for selecting one of said plurality of service providers according to the location of the cellular telephone, and for providing the service to the user according to said selected service provider.

2. The system of claim 1, wherein the service is a taxicab location service, such that said selected service provider is a taxicab driven by a driver and such that said driver drives said taxicab to the location of the cellular telephone of the user.

3. The system of claim 2, wherein said position correlator selects said taxicab directly according to a location of a cellular telephone of said driver.

4. The system of claim 2, wherein said position correlator contacts a taxicab dispatcher with the location of the cellular telephone of the user.

5. The system of claim 1, further comprising:
(d) an automatic dialing system for receiving a telephone call from the user through the cellular telephone of the user, and for automatically giving the service to the user through the cellular telephone of the user.

6. The system of claim 1, wherein said map is a database of said locations of said plurality of service providers.

7. The system of claim 1, wherein said locator comprises:
(i) a base station for receiving a first signal from the cellular telephone;
(ii) an antenna for receiving a second signal from the cellular telephone; and
(iii) a triangulator for triangulating between first signal to said base station and said second signal to said antenna in order to determine the location of the cellular telephone.

8. The system of claim 1, wherein said locator comprises:
(i) a GPS (global positioning system) transmitter connected to the cellular phone;
(ii) a GPS receiver for communicating with said GPS transmitter; and
(iii) a GPS satellite for communicating with said GPS transmitter and said GPS receiver in order to determine the location of the cellular telephone.

9. The system of claim 1, wherein the service locates a type of vendor near the user, such that said selected service provider is a company of said type of vendor, and such that the user receives directions for traveling to the location of said company from said position correlator.

10. The system of claim 9, wherein said company provides a particular type of goods.

11. The system of claim 10, wherein said company is also selected according to hours of business.

12. The system of claim 11, wherein said company is also selected according to availability of a desired product.

13. The system of claim 1, wherein the service is public transportation, such that said selected service provider is a form of public transport.

14. The system of claim 13, wherein the user is provided with guidance for traveling to the location of said form of public transport by said position correlator according to the location of the user and said map.

15. The system of claim 1, wherein said locator determines a location of a cell for communicating with the cellular telephone, such that the location of the cellular telephone is determined according to said location of said cell.

16. The system of claim 1, further comprising:
(d) a physical map for the user, featuring at least one number marked on a map location of said physical map, such that when the user places a telephone call to said marked number with the cellular telephone, the user receives information about said map location.

17. The system of claim 1, wherein said locator further comprises:
(i) a blinker transmitter for transmitting a signal for determining the location of the cellular telephone.

18. A method for providing a service to a user according to a location of a cellular telephone of the user, the method comprising the steps of:
(a) placing a telephone call by the user through the cellular telephone to request the service;
(b) determining the location of the cellular telephone of the user;
(c) selecting a service provider for providing the service according to a location of said service provider and a location of the cellular telephone of the user; and
(d) notifying the user of said location of said service provider through the cellular telephone of the user.

19. The method of claim 18, wherein said service provider is a taxicab, such that step (d) includes the step of connecting a cellular telephone of a driver of said taxicab to the cellular telephone of the user.

20. The method of claim 18, wherein said service provider is a taxicab, such that step (d) includes the step of dispatching said taxicab to the location of the cellular telephone of the user.

21. The method of claim 18, wherein said service provider is a business located at a fixed location, such that said business is selected according to a distance between said fixed location and the location of the cellular telephone of the user.

22. The method of claim 21, wherein said business is a vendor of goods, such that step (c) is also performed according to an availability of a particular type of goods.

23. The method of claim 22, wherein step (c) is also performed according to hours of business of said vendor of goods.

24. The method of claim 23, further comprising the step of:
(e) providing directions for the user to travel to said fixed location of said vendor of goods.

25. The method of claim 18, wherein said service provider is public transportation, such that said location of said service provider is a depot for boarding said public transportation, wherein step (c) is also performed according to a requested destination of the user.

26. A method for providing a reminder to a user to perform at least one action related to a fixed location according to a location of a cellular telephone of the user, the method comprising the steps of:
(a) determining the location of the cellular telephone of the user;
(b) comparing the location of the cellular telephone of the user to the fixed location; and
(c) if the location of the cellular telephone of the user is within a predetermined distance of the fixed location, communicating with the user through the cellular telephone to perform the at least one action associated with the fixed location.

27. The method of claim 26, wherein the fixed location is selected by the user.
